(19) **Europäisches Patentamt**
**European Patent Office**
**Office européen des brevets**

(11) **EP 3 447 554 A1**

(12) **EUROPEAN PATENT APPLICATION**

(43) Date of publication:
**27.02.2019 Bulletin 2019/09**

(51) Int Cl.:
***G02B 6/32*** (2006.01)

(21) Application number: **18189384.3**

(22) Date of filing: **16.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2017 US 201715686918**

(71) Applicant: **Lockheed Martin Corporation
Bethesda, Maryland 20817 (US)**

(72) Inventors:
 • **JONES, Mike Ivor**
   **Azle, TX Texas 76020 (US)**

 • **CHANKAYA, Kurt M.**
   **Keller, TX Texas 76248 (US)**
 • **LARSON, Ling Zhang**
   **Arlington, TX Texas 76017 (US)**
 • **RUSSELL, Darrel John**
   **Springtown, TX Texas 76082 (US)**
 • **TOPLIN, Jr., Effort**
   **Fort Worth, TX Texas 76244 (US)**
 • **HAYGOOD, Ryan B.**
   **Benbrook, TX Texas 76126 (US)**
 • **McELVEEN, Jr., Richard Parker**
   **Saginaw, TX Texas 76179 (US)**

(74) Representative: **Barker Brettell LLP
100 Hagley Road
Edgbaston
Birmingham B16 8QQ (GB)**

(54) **IMPROVED OPTICAL SYSTEM FOR FIBER OPTIC TERMINI**

(57) A system (100) includes a first optical fiber (101) having a first fiber face (102) at a first end. The system (100) further includes a second optical fiber (201) having a second fiber face (202) at a second end. The first end and the second end are separated by a distance (130). The system (100) also includes a first lens (105) coupled to the first fiber face (102) at the first end, and a second lens (205) coupled to the second fiber face (202) at the second end.

FIG. 1

**Description**

TECHNICAL FIELD

The present disclosure relates in general to fiber optic connectors, and more specifically to an improved optical system for expanded beam fiber optic termini.

BACKGROUND

In fiber optic transmissions, two fiber optic cables may require connections to ensure data transfer from one fiber to another. Fiber optic connectors must position two separate end-polished fibers extremely accurately to maximize signal strength. Any lateral, longitudinal and/or angular misalignment of the two fibers causes rapid decrease in communication link strength. Additionally, these fiber optic connectors may be extremely sensitive to any dirt, dust, condensation, and/or other environmental stimuli present in the air gap between the fiber faces. Techniques for rapid and precise transfer of data using fiber optic connectors may be limited.

SUMMARY OF THE DISCLOSURE

According to one embodiment, a system includes a first optical fiber having a first fiber face at a first end. The system further includes a second optical fiber having a second fiber face at a second end. The first end and the second end are separated by a distance. The system also includes a first lens coupled to the first fiber face at the first end, and a second lens coupled to the second fiber face at the second end.

According to one embodiment, a method includes coupling a first optical fiber having a first fiber face at a first end to a second optical fiber having a second fiber face at a second end. These fibers are coupled such that the first end and the second end are separated by a distance. The method further includes coupling a first lens to the first fiber face at the first end, and coupling a second lens coupled to the second fiber face at the second end.

Technical advantages of certain embodiments may include desensitization of fiber optic connectors from misalignment and contamination. Further advantages include improved aberration correction, tighter energy concentration at focus, broadband color correction, and excellent image quality over a large field of view. Other technical advantages will be readily apparent to one skilled in the art from the following figures, descriptions, and claims. Moreover, while specific advantages have been enumerated above, various embodiments may include all, some, or none of the enumerated advantages.

BRIEF DESCRIPTION OF THE DRAWINGS

For a more complete understanding of the present disclosure and its advantages, reference is now made to the following description, taken in conjunction with the accompanying drawings, in which:

FIGURE 1 illustrates an optical system for transmission of light at a fiber optic cable connection, according to certain embodiments;

FIGURES 2A, 2B, 2C, and 2D illustrate charts indicating the encircled diffraction energy of example embodiments of lenses 105 and/or 205 of FIGURE 1; and

FIGURE 3 is a flowchart illustrating a method for configuring the optical system of FIGURE 1, according to certain embodiments.

DETAILED DESCRIPTION

As discussed above, fiber optic connections are sensitive to misalignment and contamination, which may reduce the effectiveness of the transmission. In some applications, it is desirable to perform processing or manipulation of the light after the light exits the source fiber and before it enters the receiving fiber. To partially alleviate the extreme sensitivity to misalignment and contamination of fiber end-to-end connectors, Expanded Beam Termini (EBT) connectors may be used that expand and collimate the diverging beam emitted from one fiber, and focus the collimated beam back into the mating fiber with no physical contact of the optical components. This technique, called free-space optical communication, helps to desensitize fiber optic connectors from misalignment and contamination. Optical collimation and/or focusing components in EBT connectors may use spherical balls and/or gradient-index (GRIN) lenses for collimation and reimaging. These optical elements suffer from large and uncorrected monochromatic and polychromatic aberrations, especially for off-axis imagery. Optical energy is not focused as tightly on the receiving fibers as the diffraction nature of light allows, and received imagery is instead spread out over many dozens of microns with almost any degree of misalignment, which can act to reduce light intensity actually entering the receiving fiber and significantly tighten required alignment tolerances.

Optical aberrations in free space optical EBT connectors using spherical ball and/or GRIN optics impair the transmission through the connectors and can cost many decibels in signal strength. These aberrations vary with wavelength, and different connectors must be used with fibers having widely different signal wavelengths. These angle and position-dependent aberrations only further exacerbate the difficulties in attempting to make free-space optical fiber connections with single-mode fibers that have core diameters ranging from about 5-9 microns. Good signal strength is achievable over narrow spectral bands, but requires costly alignment equipment and touch labor. These may provide a sufficient data rate in tight alignment, but the poor off-axis aberration characteristics may render them extremely sensitive to lateral, longitudinal, and angular misalignment. Poor optical correction over field performance also limits their application to larger diameter multichannel photonic fibers, as signal strength falls off in the outer channels, and spreads across multiple separate channels (crosstalk) due to optical aberrations. Expensive equipment and training may be used to repeatedly position these fiber optic systems for minimum link loss in high-volume single-fiber production environments. No wide-field optical solutions exist for broadband, low crosstalk free-space optical coupling into and out of larger multichannel photonic fibers.

Thus, it may be desirable to improve the optical components used in the free-space optical fiber connectors to provide enhanced and more robust transmission throughput across connections. By incorporating well-corrected single and multi-element lenses, optical systems may have improved optical correction of single-wavelength and multi-wavelength imagery. In turn, this may provide tighter energy concentration over a much larger field of view and wider spectral band. These connectors are less sensitive to decentration, tilt, and spacing misalignment errors, and reduce connection risk and time, while maintaining high optical link transmission. These custom-designed lenses focus light in a way that it is easily received by a lens across the air gap, and thus allows for a greater tolerance of misalignment, gaps, vibrations, and other interferences. The disclosed embodiments may be applied to both single and multi-mode fibers, as well as reduce labor costs in manufacturing and maintenance of fiber optic networks. The new optical lenses may be corrected over a wide (e.g., 850-1600 nanometer) spectral band, eliminating or reducing the need for refocusing at different wavelengths, and reducing the need to have separate fiber lines for widely separated spectral wavelengths. These lenses are designed to perform sharply over angular misalignments or extended fields of view of 400-600 microns, for example, and in the presence of hundreds of microns of translational misalignment. This reduces the likelihood of the two fibers dropping link because the connection is more tolerant of installation connection and any variations and/or interferences. Further, the field of view allows these lenses to be more attractive for larger multichannel photonic fibers, as signal strengths remain constant across the channels and crosstalk is minimized. In some embodiments, moldable optical glasses may be used for manufacturing these lenses, which may reduce high-volume production costs.

The teachings of the disclosure recognize that the use of optical lenses in a fiber optic connector may provide enhanced and more robust transmission throughput across connections. The following describes systems and methods of an improved optical system for expanded beam fiber optic termini for providing these and other desired features.

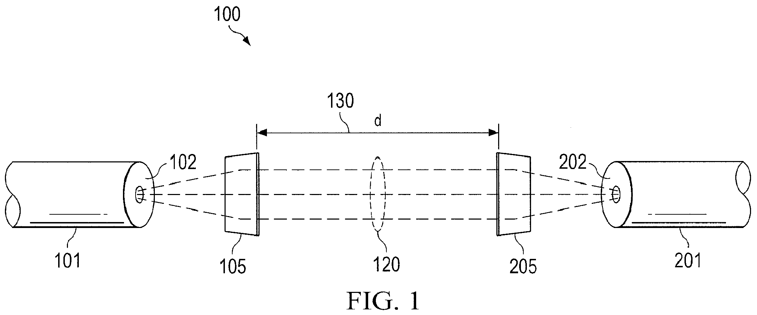

FIGURE 1 illustrates an exploded view of an optical system 100 for transmission of a light beam at a fiber optic cable connection, according to certain embodiments. System 100 includes a first fiber optic cable 101 comprising fiber face 102 and coupled to lens 105, and a second fiber optic cable 201 comprising fiber face 202 and coupled to lens 205. In system 100, fiber optic cables 101 and 201 are separated by a distance 130 across which light 120 (e.g., laser or LED) may be transferred from fiber optic cable 101 to fiber optic cable 201.

In general, system 100 involves a fiber optic cable connection to transfer light 120 (e.g., laser beam or LED light) across distance 130 to fiber optic cable 201. Specifically, lenses 105 and 205 manipulate light 120 to ensure that fiber optic cable 201 sufficiently receives the wavelengths of light 120. Lenses 105 and 205 perform optical correction of wavelengths to ensure they are deposited on fiber face 202 of fiber optic cable 201. In this way, the connections between two fiber optic cables are less sensitive to any spacing misalignment, and thus reduce connection risk and transfer time, while maintaining high optical link transmission.

In some embodiments, fiber optic cables 101 and 201 may be comprised of single, multimode, multi-channel photonic optical fibers, or any suitable housing for optical fibers. In some embodiments, fiber optic cable 101 may transmit light 120 (e.g., the source fiber), and fiber optic cable 201 may receive light 120 (e.g., the receiving fiber). In some embodiments, fiber optic cable 201 may transmit light 120 (e.g., the source fiber), and fiber optic cable 101 may be receiving light (e.g., the receiving fiber). In some embodiments, fiber optic cables 101 and 201 may be optical fibers.

In some embodiments, fiber faces 102 and 202 may be open ends of fiber optic cables 101 and 201. Light 120 transmitted from one fiber optic cable (e.g., 101) is delivered to the fiber face (e.g., fiber face 202) of another cable to ensure transmission of the light. Fiber faces 102 and 202 may have a core or focus, indicating the center portion of the face. The closer the light is to the core of fiber faces 102 and 202, the tighter the energy focus. In transmission, it is useful to control the intensity distribution of light signals at fiber face 202 of fiber 201. The tighter the concentration of light 120 to the receiving fiber (e.g., to the core of fiber faces 102 and/or 202), the higher likelihood of a high data rate. This concentration may be quantified by the encircled diffraction energy relative to the fiber core diameter, and may indicate the quality of the transmission.

In some embodiments, distance 130 may be the space between fiber optic cables 101 and 201, and/or the space between lenses 105 and 205. Lenses 105 and 205 may be coupled to fiber optic cables 101 and 201 (e.g., at fiber faces 102 and 202, respectively), such that the distance between lenses 105 and 205 is relatively the same as the distance between fiber optic cables 101 and 201. In some embodiments, fiber optic cables 101 and 201 are separated, and system 100 illustrates free-space optical communication. These two cables 101 and 201 may be housed in different components that may be independently moved around. The two components may be moved around until there is a sufficient connection between cables 101 and 201 across distance 130 such that light 120 may be transferred across them (e.g., free-space fiber optic cable connectors). For example, each cable 101 and 201 may be housed in a laptop computer, and a user may physically move one computer until cables 101 and 201 are sufficiently lined up to create a connection. This may be beneficial because it allows for flexibility without a physical connection (e.g., pin connector) between the two cables, while still being able to obtain a solid high data rate connection across a distance 130 (e.g., an air gap). In some embodiments, fiber optic cables 101 and 201 may be physically coupled such that they maintain a particular distance 130 between each other. For example, cables 101 and 201 may be fastened together with a simple, mechanical connector (e.g., that snaps the two cables together). This may be beneficial because it allows a quick and efficient way to connect cables 101 and 201, and lenses 105 and 205 allow for a high enough tolerance that cables 101 and 201 need not be perfectly aligned.

In some embodiments, lenses 105 and 205 may be multi-element, customized optical system that enable a carefully designed optical path of light from fiber optic cables 101 and/or 201. In some embodiments, lenses 105 and 205 comprise the same characteristics, and are mirror images of each other. In some embodiments, lenses 105 and 205 may be unique with different characteristics from each other. In some embodiments, lenses 105 and 205 may be designed for specific fiber specifications such that the optical system is designed to optimally transmit the light across distance 130. For example, lenses 105 and 205 may be designed for specific wavelengths that fiber optic cables 101 and 201 transmit. In some embodiments, lenses 105 and 205 may be coupled to fiber optic cables 101 and 201, respectively, and the coupling maintains the positions of the lenses relative to fiber optic cables 101 and 201, as well as fiber faces 102 and 202.

In some embodiments, lenses 105 and 205 may include specific characteristics, designed to optimally transmit light 120. For example, lenses 105 and 205 may be achromatic, which allows them to both collimate and sharply focus multiple wavelengths, rather than a single wavelength. This may be beneficial because it allows system 100 to transmit light on additional channels, and thus a higher bandwidth, transmitting more that would have been possible in other systems. In some embodiments, the optical surfaces of lenses 105 and 205 have an aspheric shape, which may minimize the aberration of light 120 produced by the lens. By having an aspheric shape, lenses 105 and 205 deviate from a single radius or curvature. The shape is commonly specified in the form of an equation:

$$S = \frac{cr^2}{1 + \sqrt{1 - c^2 r^2}} + a_4 r^4 + a^6 r^6$$

and

$$c = \frac{1}{Radius}$$

where

S = surface sag
c = curvature
r = distance from the center
$a_4$ = aspheric A4
$a_6$ = aspheric A6

In some embodiments, lenses 105 and 205 may have a front aspheric surface, a rear aspheric surface, or both a front and rear aspheric surface. Another characteristic of lenses 105 and 205 is the center thickness of the lens, which aids in correction of monochromatic and polychromatic aberrations. Also lenses 105 and 205 may be singlets, doublets (e.g., airspaced doublet or bonded doublet), and/or a wide-field Petzval-type lens. Lenses 105 and 205 may also vary in the field of view they provide (e.g., at least 400 microns). Lenses 105 and 205 may be made of any environmentally compatible optical material, such as glass or molded plastic. Lenses 105 and 205 may vary based on additional characteristics and lens prescriptions, as illustrated in Tables 1-4 below, such as the surface profile, type, radius, thickness, glass, and diameter. Lenses 105 and 205 are beneficial for system 100 because they are designed for high misalignments at different sets of wavelength bands, allowing for reliable transfer of light 120 without requiring specificity on alignment of cables 101 and 201. For example, in a traditional lens, taking an element and shifting it a small amount (e.g., tenth of a millimeter) would create a large performance deficit; however, system 100 with lenses 105 and 205 allows for energy transfer even if cables 101 and 201 are tilted, decentered, or otherwise misaligned.

Modifications, additions, or omissions may be made to the systems described herein without departing from the scope of the invention. For example, system 100 may include any number of fiber optic cables 101 and 201, lenses 105 and 205, light 120, and fiber faces 102 and 202. As another example, distance 130 may be variable, and in certain embodiments, cables 101 and 201 may be contained in separate components such that they may be moved relative to each other. The components may be integrated or separated. Moreover, the operations may be performed by more, fewer, or other components.

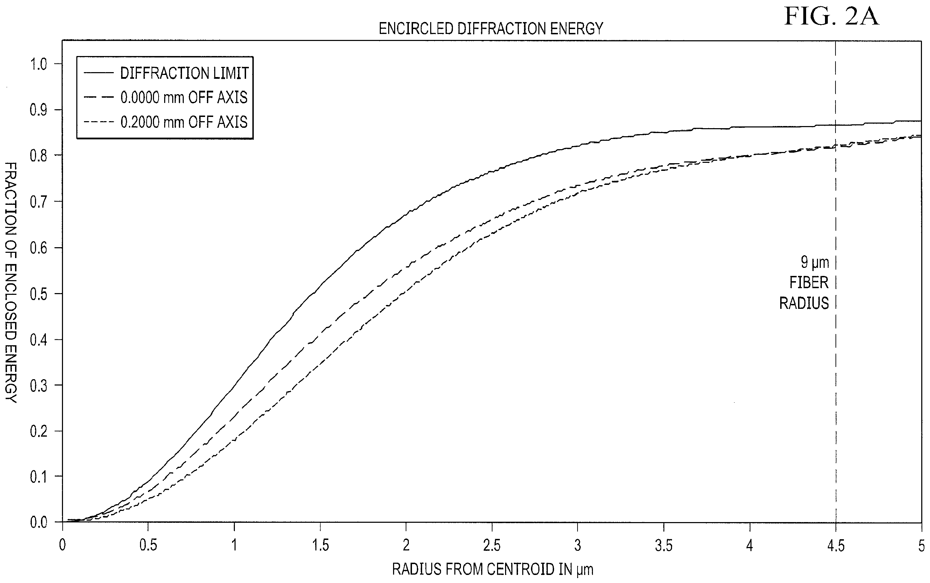

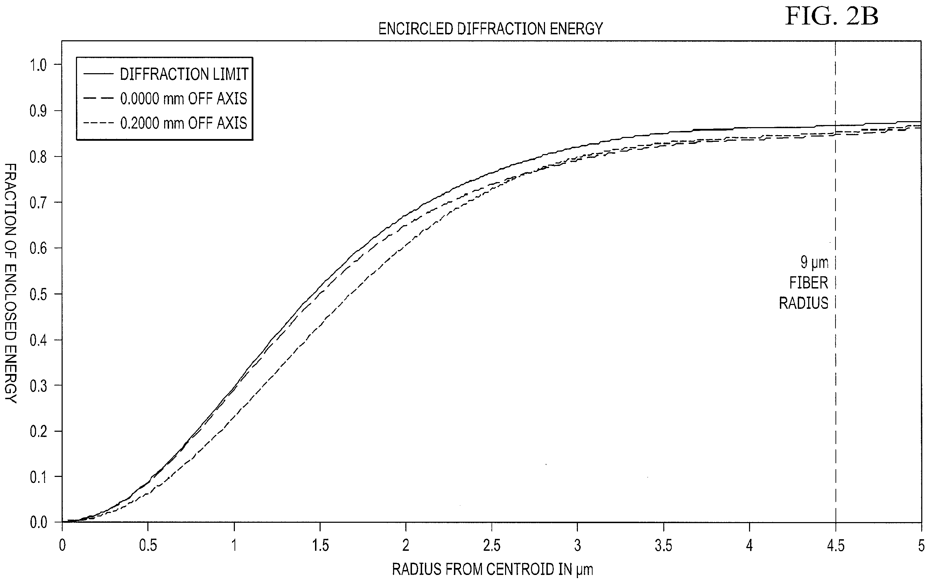

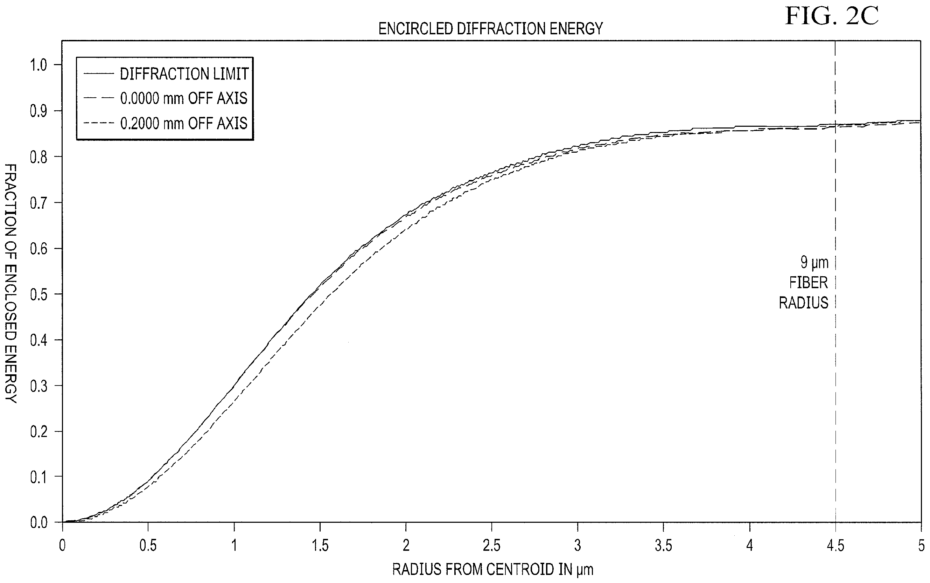

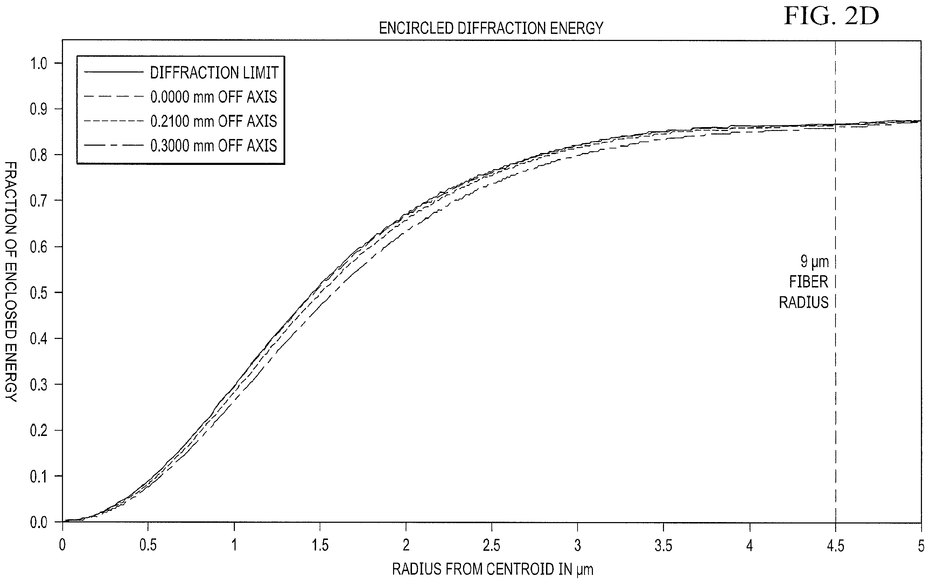

FIGURES 2A, 2B, 2C, and 2D illustrate graphs depicting encircled diffraction energy as a function of image height in microns when using various example embodiments of lenses 105 and/or 205 of FIGURE 1. Tables 1-4 below illustrate the characteristics of example embodiments of lenses 105 and/or 205, while corresponding FIGURES 2A-D illustrate the encircled diffraction energy at different field points resulting from use of the specific lenses in a system, such as system 100 of FIGURE 1.

The characteristics displayed in Tables 1-4 illustrate those that may be manipulated to ensure lenses 105 and 205 provide for optimal benefits, such as reliable transfer of light 120 without requiring specificity on alignment of cables 101 and 201. Thus, cables 101 and 201 may transmit light 120 with different wavelength bands, while ensuring a high enough concentration that all, or most of, light 120 is received by the receiving cable (e.g., cable 201). Other examples of benefits provided by lenses 105 and 205 include improved aberration correction, tighter energy concentration at focus, broadband color corrected to bring optical fiber wavelengths from below 850 nanometers to 1600 nanometers or greater to a common sharp focus, maintain excellent image quality over a large field of view spanning several hundred microns, and can be tailored to be backward compatible with existing expanded beam termini.

The following examples provide specific embodiments of lenses (e.g., lenses 105 and 205 of FIGURE 1), and are not intended to limit the invention to any specific dimensions. These examples include parameters regarding specific lens prescriptions that may be used.

EXAMPLE 1

In some embodiments, lenses 105 and/or 205 may be a NA 0.22 singlet with front and rear aspheric surfaces, for a 400 micron field of view. Table 1 below illustrates the lens prescription for this example embodiment.

TABLE 1

| Surf | Type | Radius | Thick | Glass | Diam | Aspheric A4 | Aspheric A6 |
|---|---|---|---|---|---|---|---|
| OBJ | Standard | Infinity | Infinity | | | | |
| STO | Standard | Infinity | 0.50 | | 1.30 | | |
| 2 | EVENASPH | 1.70 | 2.40 | Q-FKH2S | 1.58 | -0.016155995 | -0.0024214372 |
| 3 | EVENASPH | -3.47 | 1.67 | | 1.58 | 0.045513732 | 0.013266208 |
| IMA | Standard | Infinity | | | 0.41 | | |

Using this lens prescription with a 9 micron single mode fiber, and transmitting three wavelengths of light 120 (0.8500, 1.3100, and 1.5500) allows for a concentrated transmission of light 120. FIGURE 2A depicts the fraction of enclosed energy that is captured within a certain radius from the center (e.g., core/focus of fiber face 102 and/or 202). As indicated in FIGURE 2A, using a 9 micron fiber radius, the fraction of enclosed energy is close to the diffraction limit (e.g., the maximum that can be achieved) up to 200 microns off axis. The closer to the diffraction limit, the better and more reliable the transmission of light. This example embodiment illustrates the benefits of using lenses 105 and/or 205 to ensure light 120 is properly transmitted. This example embodiment 1 provides adequate broadband performance for single-mode fibers over a 400 micron field of view.

EXAMPLE 2

In some embodiments, lenses 105 and/or 205 may be a NA 0.22 doublet with a single rear aspheric surface, for a 400 micron field of view. Table 2 below illustrates the lens prescription for this example embodiment.

TABLE 2

| Surf | Type | Radius | Thick | Glass | Diam | Aspheric A4 | Aspheric A6 |
|------|------|--------|-------|-------|------|-------------|-------------|
| OBJ | Standard | Infinity | Infinity | | | | |
| STO | Standard | Infinity | 0.50 | | 1.30 | | |
| 2 | EVENASPH | 1.91 | 1.34 | Q-PSKH1S | 1.58 | -0.004244240 | 0.003081777 |
| 3 | Standard | -1.76 | 1.46 | L-TIH53 | 1.58 | | |
| 4 | EVENASPH | -3.60 | 1.70 | | 1.58 | 0.020746522 | 0.012318134 |
| IMA | Standard | Infinity | | | 0.40 | | |

Using this lens prescription with a 9 micron single mode fiber, and transmitting three wavelengths of light 120 (0.8500, 1.3100, and 1.5500) allows for a concentrated transmission of light 120. FIGURE 2B depicts the fraction of enclosed energy that is captured within a certain radius from the center (e.g., core/focus of fiber face 102 and/or 202 and 200 microns off axis). As indicated in FIGURE 2B, using a 9 micron fiber radius, the fraction of enclosed energy is close to the diffraction limit (e.g., the maximum that can be achieved) over a 400 micron field of view. Compared to example 1 and FIGURE 2A, the encircled diffraction energy in this example embodiment 2 is even closer to the diffraction limit. The closer to the diffraction limit, the better and more reliable the transmission of light. This example embodiment illustrates the benefits of using lenses 105 and/or 205 to ensure light 120 is properly transmitted. This example embodiment 2 provides improved image sharpness over the 850-1550 nanometer spectrum and 400 micron field of view.

EXAMPLE 3

In some embodiments, lenses 105 and/or 205 may be a NA 0.22 airspaced doublet with a single rear aspheric surface, for a 400 micron field of view. Table 3 below illustrates the lens prescription for this example embodiment.

TABLE 3

| Surf | Type | Radius | Thick | Glass | Diam | Aspheric A4 | Aspheric A6 |
|------|------|--------|-------|-------|------|-------------|-------------|
| OBJ | Standard | Infinity | Infinity | | | | |
| STO | Standard | Infinity | 0.50 | | | | |
| 2 | Standard | 52.50 | 0.52 | F4520 | | | |
| 3 | Standard | 38.30 | 0.30 | | | | |
| 4 | EVENA SPH | 2.53 | 1.75 | Q-FKH2S | | -0.028699652 | -0.0113195 |
| 5 | Standard | -2.17 | 2.32 | | | | |
| IMA | Standard | Infinity | | | | | |

Using this lens prescription with a 9 micron single mode fiber, and transmitting three wavelengths of light 120 (0.8500, 1.3100, and 1.5500) allows for a concentrated transmission of light 120. FIGURE 2C depicts the fraction of enclosed energy that is captured within a certain radius from the center (e.g., core/focus of fiber face 102 and/or 202) and over a 400 micron diameter field of view. As indicated in FIGURE 2C, using a 9 micron fiber radius, the fraction of enclosed energy almost reaches the diffraction limit (e.g., the maximum that can be achieved). Compared to example 1 and 2, the encircled diffraction energy in this example embodiment 3 is even closer to the diffraction limit (compare to FIGURE 2A and 2B). The closer to the diffraction limit, the better and more reliable the transmission of light 120. This example embodiment illustrates the benefits of using lenses 105 and/or 205 to ensure light 120 is properly transmitted. This example embodiment 3 provides improvement in field performance over example embodiments 1 and 2.

EXAMPLE 4

In some embodiments, lenses 105 and/or 205 may be a NA 0.22 wide-field Petzval-type lens with a single aspheric surface, for a 600 micron field of view. Table 4 below illustrates the lens prescription for this example embodiment.

TABLE 4

| Surf | Type | Radius | Thick | Glass | Diam | Aspheric A4 | Aspheric A6 |
|---|---|---|---|---|---|---|---|
| OBJ | Standard | Infinity | Infinity | | | | |
| STO | Standard | Infinity | 0.50 | | 1.30 | | |
| 2 | Standard | 2.17 | 0.65 | Q-PSKH1S | 1.58 | | |
| 3 | Standard | -1.90 | 0.30 | M-NBFD83 | 1.58 | | |
| 4 | EVENASP H | Infinity | 0.82 | | 1.58 | | |
| 5 | Standard | 20.95 | 0.44 | N-PK51 | 1.58 | | |
| 6 | EVENASP H | -2.31 | 1.967 | | 1.58 | 0.042411697 | -0.005938461 |
| IMA | Standard | Infinity | | | 0.602 | | |

Using this lens prescription with a 9 micron single mode fiber, and transmitting three wavelengths of light 120 (0.8500, 1.3100, and 1.5500) allows for a concentrated transmission of light 120. FIGURE 2D depicts the fraction of enclosed energy that is captured within a certain radius from the center (e.g., core/focus of fiber face 102 and/or 202). As indicated in FIGURE 2D, using a 9 micron fiber radius, the fraction of enclosed energy essentially reaches the diffraction limit (e.g., the maximum that can be achieved) over a 600 micron diameter field of view. Compared to example embodiments 1, 2, and 3, the encircled diffraction energy in this example embodiment 4 is even closer to the diffraction limit (compare to FIGURES 2A, 2B, and 2C). The closer to the diffraction limit, the better and more reliable the transmission of light. This example embodiment illustrates the benefits of using lenses 105 and/or 205 to ensure light 120 is properly transmitted. This example embodiment 4 provides superior optical performance.

Examples 1-4 above are merely illustrative examples, and not intended to be limiting. The characteristics shown and lens prescriptions may be altered and optimized to fit the necessary spatial and spectral characteristics of a particular fiber. For example, the following lens characteristics may be altered, combined, and/or adjusted between any of the four example embodiments, as well as other design features: field of view, aspheric curves, type of lens, surface profile, type, radius, thickness, material of lens, diameter, and any other characteristic of the lens.

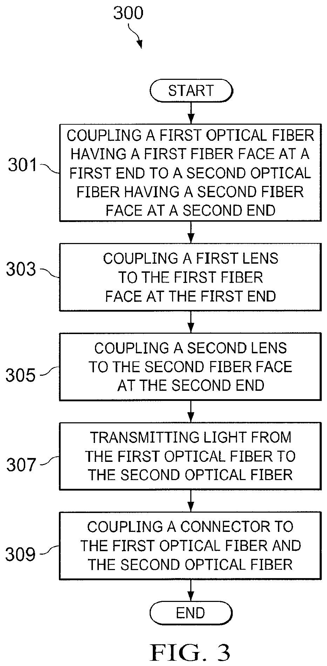

FIGURE 3 is a flowchart illustrating a method for configuring the optical system of FIGURE 1, according to certain embodiments. The method begins at step 301, in some embodiments, which couples a first optical fiber having a first fiber face at a first end to a second optical fiber having a second fiber face at a second end. By coupling the first optical fiber and the second optical fiber, the fibers may be separated by a distance. The distance may be fixed or variable (e.g., such that the cables are moveable with respect to each other). Coupling, in some embodiments, maintains an alignment between the first fiber face and the second fiber face such that light may be transmitted from one cable to another.

At steps 303 and 305, in some embodiments, a first lens is coupled to the first fiber face at the first end and a second lens is coupled to the second fiber face at the second end. The first and second lenses may be a lens such as lenses 105 and 205 of FIGURE 1. The lenses are operable to transmit light with improved aberration correction from the first fiber face such that the light is received near the core of the second fiber face (e.g., there is a concentration of light), which provides for excellent image quality.

At step 307, in some embodiments, light is transmitted from the first optical fiber to the second optical fiber. The light may be a light beam, laser beam, LED, or any suitable form of light. In some embodiments, the light indicates a transfer of data (e.g., series of 0s and Is, image, information), and needs to be received by the second optical fiber to ensure the data is transmitted. Lenses provide that the light is transmitted even when the fiber faces of the optical fibers are not perfectly aligned. This provides a ease of transmission without requiring mechanical and costly perfect alignment of fiber faces.

At step 309, in some embodiments, a connector is coupled to the first optical fiber and the second optical fiber. The connector may maintain a distance between the fiber faces of each optical fiber. The connector may be a simple mechanical connector that maintains a relative alignment between the fiber faces, such that lenses may transmit the data near the core of the receiving fiber face. After this, the method ends.

Modifications, additions, or omissions may be made to the methods described herein without departing from the scope of the invention. For example, the steps may be combined, modified, or deleted where appropriate, and additional steps may be added. For example, step 309 may be omitted when fiber optic cables are contained within other components, and are manual moved relative to each other such that their respective fiber faces may be aligned to sufficiently transfer the light between them. Additionally, the steps may be performed in any suitable order without departing from the scope of the present disclosure.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

**Claims**

1. A system, comprising:

   a first optical fiber comprising a first fiber face at a first end;
   a second optical fiber comprising a second fiber face at a second end, the first end and the second end separated by a distance;
   a first lens coupled to the first fiber face at the first end; and
   a second lens coupled to the second fiber face at the second end.

2. A method, comprising:

   coupling a first optical fiber comprising a first fiber face at a first end to a second optical fiber comprising a second fiber face at a second end, coupling such that the first end and the second end are separated by a distance;
   coupling a first lens to the first fiber face at the first end; and
   coupling a second lens coupled to the second fiber face at the second end.

3. The system of claim 1, wherein the first optical fiber is configured to transmit light and the second optical fiber is configured to receive the light; or
   the method of claim 2, further comprising:

   transmitting light from the first optical fiber to the second optical fiber.

4. The system of claim 1 or of claim 3, or the method of claim 2 or of claim 3, wherein the second optical fiber is configured to receive light from the first optical fiber, and the light received by the second fiber face of the second optical fiber has a fraction of enclosed energy of at least 0.7.

5. The system of claim 1 or of claim 3 or of claim 4, or the method of claim 2 or of claim 3 or of claim 4, wherein the second optical fiber is configured to receive light from the first optical fiber, and the light received by the second fiber face of the second optical fiber has a fraction of enclosed energy of at least 0.85.

6. The system of claim 1 or of any of claims 3 to 5, or the method of claim 2 or of any of claims 3 to 5, wherein the first lens and the second lens are achromatic.

7. The system of claim 1 or of any of claims 3 to 6, or the method of claim 2 or of any of claims 3 to 6, wherein at least one of the first lens and the second lens comprise at least one aspheric surface.

8. The system of claim 1 or of any of claims 3 to 7, or the method of claim 2 or of any of claims 3 to 7, wherein the first optical fiber and the second optical fiber are 9 micron single mode fibers.

9. The system of claim 1 or of any of claims 3 to 8, or the method of claim 2 or of any of claims 3 to 8, wherein the first optical fiber and the second optical fiber comprise at least a 400 micron field of view.

10. The system of claim 1 or of any of claims 3 to 9, further comprising a connector to couple the first optical fiber and the second optical fiber, the connector to maintain the distance between the first end and the second end; or the method of claim 2 or of any of claims 3 to 9, first comprising:

    coupling a connector to the first optical fiber and the second optical fiber, the connector configured to maintain the distance between the first end and the second end.

11. The system of claim 1 or of any of claims 3 to 10, or the method of claim 2 or of any of claims 3 to 10, wherein the first optical fiber and the second optical fiber comprise at least a 600 micron field of view.

12. An optical system, comprising:

    a first optical fiber comprising a first fiber face at a first end, the first optical fiber configured to transmit light;
    a second optical fiber comprising a second fiber face at a second end, the first end and the second end separated by a distance, the second optical fiber configured to receive the light;
    a first lens coupled to the first fiber face at the first end;
    a second lens coupled to the second fiber face at the second end; and

    wherein:

    the first lens and the second lens are achromatic;
    at least one of the first lens and the second lens comprise at least one aspheric surface; and
    the light received by the second fiber face of the second optical fiber has a fraction of enclosed energy of at least 0.7.

FIG. 1

FIG. 2A

ENCIRCLED DIFFRACTION ENERGY

FRACTION OF ENCLOSED ENERGY

RADIUS FROM CENTROID IN µm

9 µm FIBER RADIUS

DIFFRACTION LIMIT
0.0000 mm OFF AXIS
0.2000 mm OFF AXIS

11

FIG. 2B

ENCIRCLED DIFFRACTION ENERGY

Legend:
- DIFFRACTION LIMIT
- 0.0000 mm OFF AXIS
- 0.2000 mm OFF AXIS

Y-axis: FRACTION OF ENCLOSED ENERGY (0.0 to 1.0)

X-axis: RADIUS FROM CENTROID IN μm (0 to 5)

9 μm FIBER RADIUS

EP 3 447 554 A1

FIG. 2C

ENCIRCLED DIFFRACTION ENERGY

EP 3 447 554 A1

FIG. 2D

ENCIRCLED DIFFRACTION ENERGY

Legend:
- DIFFRACTION LIMIT
- 0.0000 mm OFF AXIS
- 0.2100 mm OFF AXIS
- 0.3000 mm OFF AXIS

9 μm FIBER RADIUS

Y-axis: FRACTION OF ENCLOSED ENERGY

X-axis: RADIUS FROM CENTROID IN μm

EP 3 447 554 A1

300

```
                   ┌─────────────┐
                   │    START    │
                   └──────┬──────┘
                          │
                          ▼
        ┌─────────────────────────────────┐
        │  COUPLING A FIRST OPTICAL FIBER  │
        │  HAVING A FIRST FIBER FACE AT A  │
  301   │  FIRST END TO A SECOND OPTICAL   │
        │  FIBER HAVING A SECOND FIBER     │
        │  FACE AT A SECOND END            │
        └────────────────┬────────────────┘
                          │
                          ▼
        ┌─────────────────────────────────┐
        │     COUPLING A FIRST LENS        │
  303   │       TO THE FIRST FIBER         │
        │     FACE AT THE FIRST END        │
        └────────────────┬────────────────┘
                          │
                          ▼
        ┌─────────────────────────────────┐
        │     COUPLING A SECOND LENS       │
  305   │   TO THE SECOND FIBER FACE       │
        │        AT THE SECOND END         │
        └────────────────┬────────────────┘
                          │
                          ▼
        ┌─────────────────────────────────┐
        │   TRANSMITTING LIGHT FROM        │
  307   │   THE FIRST OPTICAL FIBER TO     │
        │   THE SECOND OPTICAL FIBER       │
        └────────────────┬────────────────┘
                          │
                          ▼
        ┌─────────────────────────────────┐
        │   COUPLING A CONNECTOR TO        │
  309   │   THE FIRST OPTICAL FIBER AND    │
        │   THE SECOND OPTICAL FIBER       │
        └────────────────┬────────────────┘
                          │
                          ▼
                   ┌─────────────┐
                   │     END     │
                   └─────────────┘
```

# FIG. 3

Europäisches
Patentamt

European
Patent Office

Office européen
des brevets

# EUROPEAN SEARCH REPORT

**Application Number**

EP 18 18 9384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/320569 A1 (FORTUSINI DAVIDE DOMENICO [US] ET AL) 3 November 2016 (2016-11-03) * paragraphs [0054] - [0070] * * figures 5-7 * | 1-12 | INV. G02B6/32 |
| X | US 6 438 290 B1 (BIETRY JOSEPH R [US] ET AL) 20 August 2002 (2002-08-20) * columns 5-9 * * figures 9-13 * | 1-12 | |
| X | US 2016/178845 A1 (LEGG THOMAS [UA] ET AL) 23 June 2016 (2016-06-23) * paragraphs [0018] - [0030] * * figures 1, 3-6 * | 1-12 | |
| A | Anonymous: "FiberPort Collimators / Couplers", , 15 April 2016 (2016-04-15), XP055544546, Thorlabs Retrieved from the Internet: URL:https://web.archive.org/web/2016041519 2125/http://www.thorlabs.com/NewGroupPage9 .cfm?ObjectGroup_ID=2940 [retrieved on 2019-01-18] * pages 1-3 * | 1-12 | **TECHNICAL FIELDS SEARCHED (IPC)** G02B |

The present search report has been drawn up for all claims

| Place of search | Date of completion of the search | Examiner |
|---|---|---|
| The Hague | 18 January 2019 | Hohmann, Leander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 447 554 A1**

## ANNEX TO THE EUROPEAN SEARCH REPORT
## ON EUROPEAN PATENT APPLICATION NO.

EP 18 18 9384

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2019

| Patent document cited in search report | | | Publication date | Patent family member(s) | | | Publication date |
|---|---|---|---|---|---|---|---|
| US 2016320569 | A1 | | 03-11-2016 | CN | 107690593 | A | 13-02-2018 |
| | | | | EP | 3289397 | A1 | 07-03-2018 |
| | | | | US | 2016320569 | A1 | 03-11-2016 |
| | | | | WO | 2016178884 | A1 | 10-11-2016 |
| US 6438290 | B1 | | 20-08-2002 | EP | 1168012 | A2 | 02-01-2002 |
| | | | | JP | 2002055276 | A | 20-02-2002 |
| | | | | US | 6438290 | B1 | 20-08-2002 |
| US 2016178845 | A1 | | 23-06-2016 | GB | 2533436 | A | 22-06-2016 |
| | | | | US | 9372310 | B1 | 21-06-2016 |

EPO FORM P0459

For more details about this annex : see Official Journal of the European Patent Office, No. 12/82